# EUROPEAN PATENT SPECIFICATION

(11) **EP 1 914 289 B1**
(45) Date of publication and mention of the grant of the patent: **16.12.2009**
(21) Application number: 06380272.2
(22) Date of filing: 20.10.2006
(51) Int. Cl.: C09K 11/77

(54) **Highly hydrophobic lanthanide-organic porous material with fluorescence and magnetic properties**
Stark hydrophobes Lanthanid-organisches poröses Material mit fluoreszenten und magnetischen Eigenschaften
Matériau organique poreux hautement hydrophobe ayant des propriétés fluorescentes et magnetiques

(43) Date of publication of application: 23.04.2008
(73) Proprietor: CONSEJO SUPERIOR DE INVESTIGACIONES CIENTIFICAS, 28006 Madrid (ES); UNIVERSIDAD POLITECNICA DE VALENCIA, 46022 Valencia (ES)
(72) Inventor: Corma Canos, Avelino c/o Instituto de Tecnologia, E-46022 Valencia (ES); Rey Garcia, Fernando c/o Instituto de Tecnologia, E-46022 Valencia (ES); Atienzar Corvillo, Pedro c/o Instituto Tecnologia, E-46022 Valencia (ES); Garcia Gomez, Hermenegildo Instituto Tecnologia, E-46022 Valencia (ES); Harbuzaru, Bogdan-Vasile c/o Instituto Tecnologia, E-46022 Valencia (ES)
(74) Representative: Ungria Lopez, Javier

(56) References cited:
- WO-A-2006/110740
- WO-A2-2004/101575
- SEWARD, COREY ET AL: "1-D Chain and 3-D grid green luminescent terbium(III) coordination polymers: {Tb(O2CPh)3(CH3OH)2(H2O)}n and {Tb2(O2CPh)6(4,4'-bipy)}n" JOURNAL OF THE CHEMICAL SOCIETY, DALTON TRANSACTIONS, CODEN: JCSDAA; ISSN: 1472-7773, no. 2, 2001, pages 134-137, XP002422962
- REINEKE, THERESA M. ET AL: "From Condensed Lanthanide Coordination Solids to Microporous Frameworks Having Accessible Metal Sites" JOURNAL OF THE AMERICAN CHEMICAL SOCIETY, CODEN: JACSAT; ISSN: 0002-7863, vol. 121, no. 8, 1999, pages 1651-1657, XP002422963
- ZHANG ET AL: "Synthesis, characterization and photoluminescence properties of two new europium(III) coordination polymers with 3D open framework" JOURNAL OF MOLECULAR STRUCTURE, ELSEVIER, AMSTERDAM, NL, vol. 796, no. 1-3, 30 August 2006 (2006-08-30), pages 187-194, XP005638376 ISSN: 0022-2860
- DE LILL, DANIEL T. ET AL: "Toward Templated Metal-Organic Frameworks: Synthesis, Structures, Thermal Properties, and Luminescence of Three Novel Lanthanide-Adipate Frameworks" INORGANIC CHEMISTRY, CODEN: INOCAJ; ISSN: 0020-1669, vol. 44, no. 2, 2005, pages 258-266, XP002422964

## Description

### Field of the invention

The present invention relates to a novel family of highly hydrophobic microporous lanthanide-organic materials with luminescent, magnetic or luminescent and magnetic properties and its method of preparation. It also relates to different processes for preparing said materials and to their use in different applications.

### Background of Invention

The first report about a metal organic framework (MOF) in 1941 referred to Zn(CN)₂ and Cd(CN)₂ where the structure is made by the formation of linkages between the metal (Zn or Cd) and the bifunctional ligand CN'. In 1965 Tomic made some coordination polymers from dicarboxylic acids and metals like Zn, Ni Al and Fe. Later, Yaghi and col. (US005648508; WO02/088148A1; Nature 1995, 378, 703; Nature 1999, 402, 276) presented some new structures of MOFs. Since then, different MOF structures have been published and patented (US20050124819A1, US20050154222A1, Journal of Molecular Structure 2006, 796(1-3), 165) and as occurs with zeolites, they have different pore topologies, dimensions and compositions, and consequently they present different behaviors and utilities for applications such as gas separation, gas storage or even catalysis (JACS 2006, 128(13), 4180; Langmuir 2006, 22(21), 8784; US 20030148165A1; US 20050192175A1; Angewandte Chemie, International Edition 2006, 45(16), 2542; Journal of Materials Chemistry 2004, 14, 2683). Some publications have described the synthesis of some structures of europium or terbium-containing MOFs, but they have shown a strong quenching effect for their fluorescence in the presence of water or a polar solvent *(*JACS 2006, 128, 10403; Inorganic Chemistry 2005, 44, 258; JACS 1999, 121, 1651; Chemistry of Materials 2004, 16, 1177).

The present invention describes a new family of lanthanide-containing MOF type materials with new crystalline structures which possesses photoluminescent, magnetic, or both, photoluminescent and magnetic properties with an extraordinary emission even in the presence of water. These new porous crystalline materials also show a high thermal stability and hydrophobicity. The combination of the above properties, together with their particular compositions, makes them unique materials. These solids could be useful in: photoluminescent detectors, gas sensors, magnetic detectors, data storage devices, optical amplifiers, lasers, electroluminescent devices, catalysis or gas purification. Indeed, the design of luminescent lanthanide sensors requires several properties like: protection of the lanthanide ions from quenching by high energy vibrations (solvent molecules as water or chelating groups), long time stability of the structure as well as of the luminescent properties, multiple absorbing groups suitable for energy transfer in order to efficiently feed the metal-centered excited states. The materials of the present invention successfully comply with all these requirements.

The potential advantages of lanthanide emitters over other type of fluorescent organic emitters are that lanthanide ions have sharp emission bands with colors ranging from blue to red, and the devices using lanthanide compounds as emitters may have a much higher emission efficiency than those using fluorescent organic emitters. The luminescent intensity is strongly dependent on the efficiency of ligand absorption, the efficiency of ligand-to-metal energy transfer, and the efficiency of metal luminescence. The emission intensity of lanthanides which is usually very week is enhanced by the use of an appropriate ligand which in the present invention also plays a role in achieving the microporosity of the crystalline material. The ligands used in this invention are fluorinated to provide high hydrophobicity to the final solids. This is very important for luminescent materials because normally the water quenches the fluorescence by coupling of the excited states of the lanthanide ions with the vibrational levels of O-H.

The photoluminescence emission is proportional to the number of emitters, then for the design of photoluminiscent sensors, the lanthanide-organic structures that provide a large number of emitters with very high accessibility will be the desired compounds. Then, very low density solids, such as those obtained from the spatial arrangement of isolated emitters and spacers are not the most adequate, and columnar or layered solids will be preferred for these applications, since these columnar or layered structures provide at the same time full accessibility to the emitters through well tailored entrances and high concentration of emitters in the solids, then a smaller volume fraction of these solids will render photoluminescence response equal to other solids previously described in the art.

### Description of the invention

The present invention refers to a hydrophobic porous lanthanide-organic material characterized in that it comprises columns or layers wherein the lanthanide atoms are located, said columns or layers are kept apart from each other by the presence of fluorinated organic linkers, said linkers containing at least two functional groups able to donate electrons.

The functional groups are preferably selected from among carboxylate, sulfonate (-SO₃⁻), amines and mixtures thereof. Among the amines, secondary amines are preferred (-NR₂).

The lanthanide metal is selected from among La, Ce Pr, Nd, Sm, Eu, Gd, Tb, Dy, Ho, Er, Tm, Lu and Yb and mixtures thereof.

According to a particular embodiment the lanthanide metal is chosen between La, Ce Pr, Nd, Sm, Eu, Gd, Tb, Dy, Ho, Er, Tm, Lu, Yb and the organic linker placed between subsequent columns or layers has the general formula

*XnA*

wherein *X* is a functional organic group able to donate electrons, *A* is an organic linker that contains at least one fluorine atom in its composition and *n* is the number of functionalities linked to the *A* spacer and is comprised between 2 and 6.

According to a particular embodiment the organic linker has one or more aromatic rings and a portion of hydrogen atoms present on the aromatic rings are partially or completely substituted. The substituents in the aromatic rings are preferably selected from among Cl, Br, I and mixtures thereof.

According to a particular preferred embodiment, the lanthanide metal is selected from among La, Ce Pr, Nd, Sm, Eu, Gd, Tb, Dy, Ho, Er, Tm, Lu and Yb and mixtures thereof and the organic linker is 4,4'-(1,1,1,3,3,3-hexafluoropropane-2,2-diyl)dibenzoic acid (HFIPBB).

According to a particular more preferred embodiment the lanthanide-organic material contains 4,4'-(1,1,1,3,3,3-hexafluoropropane-2,2-diyl)dibenzoate as organic linker, and shows at least the following X-Ray diffraction lines in its X-Ray pattern:

| Pos. [°2Th.] ± 0.5 | Rel. Int. [%] |
|---|---|
| 4.7 | S |
| 8.2 | M |
| 9.5 | VS |
| 12.6 | Mw |
| 14.3 | Mw |
| 22.0 | W |
| 24.0 | Vw |
| 25.0 | Vw |
| 29.2 | Vw |

wherein the relative intensities are referred to the most intense line, which has 100% intensity and vw<15; 15≤W<30; 30≤mw<50; 50≤m<65; 65≤S<85; VS≥85.

According to an additional preferred embodiment the lanthanide-organic material contains 4,4'-(1,1,1,3,3,3-hexafluoropropane-2,2-diyl)dibenzoate as organic linker, and shows at least the following X-Ray diffraction lines in its X-Ray pattern:

| Pos. [°2Th.] ± 0.5 | Rel. Int. [%] |
|---|---|
| 5,9 | M |
| 7,0 | VS |
| 9,2 | VS |
| 10,9 | Vw |
| 11,9 | Vw |
| 12,1 | Vw |
| 12,5 | V |
| 13,9 | M |
| 14,1 | Mw |
| 15,3 | Vw |
| 18,5 | Vw |
| 20,9 | Vw |
| 22,0 | Vw |
| 26,6 | Vw |
| 27,8 | Vw |

wherein the relative intensities are referred to the most intense line, which has 100% intensity and vw<15; 15≤w<30; 305≤mw<50; SO≤m<65; 65≤S<85; VS≥85. Most preferably the lanthanide organic material contain a lanthanide metal is selected from among La, Ce, Pr, Nd, Sm, Eu, Gd, Tb, Dy, Ho, Er, Tm, Lu Yb and mixtures thereof and show the X-ray data shown in the previous table.

According to an additional preferred embodiment, the organic linker is the tetraflouroterephthalic acid (TFTPA) and the lanthanide metal is selected from among La, Ce Pr, Nd, Sm, Eu, Gd, Tb, Dy, Ho, Er, Tm, Lu and Yb and mixtures thereof.

According to a particular more preferred embodiment the lanthanide-organic material contains tetraflouroterephthalic acid (TFTPA) as organic linker, and shows at least the following X-Ray diffraction lines in its X-Ray pattern:

| Pos. [°2Th.] ± 0.5 | Rel. Int [%] |
|---|---|
| 8.2 | VS |
| 8.7 | S |
| 12.1 | vw |
| 17.6 | w |
| 18.7 | vw |
| 19.4 | w |
| 23.7 | vw |
| 26.0 | w |
| 26.5 | vw |
| 27.3 | w |

wherein the relative intensities are referred to the most intense line, which has 100% intensity and vw<15; 15≤w<30; 30≤mw<50; 50≤um<65; 65≤S<85; VS≥85. Most preferably the lanthanide organic material contain a lanthanide metal is selected from among La, Ce, Pr, Nd, Sm, Eu, Gd, Tb, Dy, Ho, Er, Tm, Lu Yb and mixtures thereof and show the X-ray data shown in the previous table.

The materials claimed in this invention are characterized by their crystalline structure and compositions.

The chemical composition of the materials claimed in this invention in the solvent free form form has a formula corresponding to MT_{z}L_{y} wherein M is one or more lanthanide metals, T is an atom selected from among O, S and N acting as a bridge between two M atoms, and L is the fluorinated organic linker *XₙA*, which interconnects subsequent columns or layers, the *z* value can be varied between 0 and 3, *y* can be varied between 0.2 and 5 and A is the organic linker that contains *n* functionalities *X.*

The chemical composition of the materials claimed in this invention in the solvent free form in a preferred embodiment is MO_{z}L*_{y}* where M is a lanthanide metal such as La, Ce, Pr, Nd, Sm, Eu, Gd, Tb, Dy, Ho, Er, Tm or Yb and mixture thereof, O is an oxygen bridge between two M atoms. The lanthanide atoms and oxygens are arranged in such way that they form columns or layers instead of isolated clusters, L is the fluorinated organic linker *XₙA,* which interconnects subsequent columns or layers. The *z* value can be varied between 0 and 3, *y* can be varied between 0.2 and 5 and A is the organic linker that contains *n* functionalities *X*.

The distance between lanthanide atoms in at least one crystallographic direction is close to the distance between the *X* groups of the same organic linker yielding to a metal organic framework type of solid.

The present invention also refers to a method of preparation of a hydrophobic porous lanthanide-organic material previously defined which comprises at least the steps of:
- mixing a solution containing one ore more metal ions from the lanthanides group along with the corresponding metal salt counteranion, with a solution or a dispersion of an organic or inorganic solvent or a mixture of both, containing the fluorinated ligand and
- heating the mixture at temperatures from 20 to 300°C and for periods of time from 30 minutes to one month in order to generate the hydrophobic lanthanide-organic material.

According to particular embodiments, the mixture is heated at temperatures from 20 to 200°C at the autogeneous pressure in autoclave, or at atmospheric pressure under reflux or in open beaker, with or without agitation for a period of time from 30 minutes to 1 month depending on the solvent selection.

The metal salts can be for example, one or more of the following: sulfate, nitrate, nitrite, sulfite, bisulfite, phosphate, hydrogen phosphate, dihydrogene phosphate, diphosphate, triphosphate, phosphite, chloride, chlorate, bromide, bromate, iodide, iodate, carbonate, bicarbonate and mixtures thereof.

According to a particular embodiment, the process comprises the use of the organic linker 4,4'-(1,1,1,3,3,3-hexafluoropropane-2,2-diyl)dibenzoic acid and the solvent is selected from among aqueous, organic solvents and a mixture of both, and
the mixture is heated at temperatures between 20 and 300°C and for periods of time from 30 minutes to one month.

According to an additional particular embodiment the method comprises the steps of:
- mixing a solution containing one ore more metal ions from the lanthanide group along with the corresponding metal salt counteranion, with a dispersion of the ligand 4,4'-(1,1,1,3,3,3-hexafluoropropane-2,2-diyl)dibenzoic acid in water, and
- heating the mixture at temperatures comprises from 20 to 300°C and for periods of time from 30 minutes to one month.

According to a different particular embodiment the method comprises the steps of:
- mixing a solution containing one ore more metal ions from the lanthanide group along with the corresponding metal salt counteranion, with a dispersion of the ligand tetraflouroterephthalic acid in water or organic solvent or mixture of both, and
- heating the mixture at temperatures comprises from 20 to 300°C and for periods of time from 30 minutes to one month.

In the preparation of the materials of this invention the molar ratio of lanthanide metal to organic linker goes from 0.1 to 10, preferably from 0.2 to 5, more preferably from 0.5 to 2.

The amount of solvents is not critical but can control the crystal growth, but in a preferred embodiment, the molar ratio between solvent and lanthanide metal is in the range of 10 to 10000. The solvent may be polar or non polar, organic or inorganic or a mixture of both. Examples of non aqueous solvents include n-alkanes (pentane, hexane), aromatics such as benzene, toluene, xylene, chlorobenzene, aniline, naphthalene, alcohols such as methanol, ethanol, n-propanol, isopropanol, ketones for instance acetone, butanone; halogenated solvents such as 1,2-dichloroethane, chloroform or dimethylformamide (DMF), tetrahydrofurane, triethylamine, dimethylether and mixtures thereof. The growth of large single crystals of these microporous materials is made by the adequate choice of solvent (or mixture of solvents), temperature and (or) the use of seeds. The size of the crystals of these microporous materials is made by the adequate choice of solvent (or mixture of solvents), temperature and optionally the use of seeds. In general, highly shaped crystals are of interest because they can be used as magnetic, photoluminescent sensors and for laser technologies.

In a preferred embodiment of this invention the preparation of the crystalline hydrophobic metal organic frameworks of this invention comprises the following steps of mixing:
1. A solution containing one ore more metal salts (for example: sulfate, nitrate, nitrite, sulfite, bisulfite, phosphate, hydrogen phosphate, dihydrogene phosphate, diphosphate, triphosphate, phosphite, chloride, chlorate, bromide, bromate, iodide, iodate, carbonate, bicarbonate) containing metal ions from the lanthanide group: La, Ce, Pr, Nd, Sm, Eu, Gd, Tb, Dy, Ho, Er, Tm and Yb, which is mixed with an organic or inorganic solvent or a mixture of both, containing for example the following organic linker: 4,4'-(1,1,1,3,3,3-hexafluoropropane-2,2-diyl)dibenzoic acid (**Formula 1**). 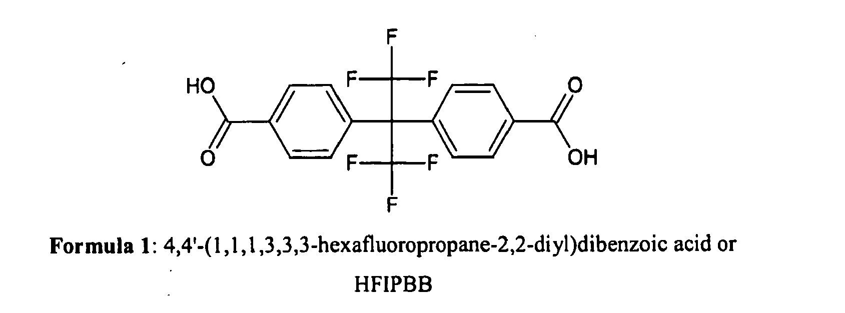
2. The mixture is heated at temperatures from 20 to 200°C in autoclave, with a reflux or in open beaker, with or without agitation for a period of time from 30 minutes to 1 month depending on the solvent selection.
3. The resulting solid is separated from its mother liquor by filtration, centrifugation, decantation or any separation method and washed with water, an organic solvent or organic-water mixtures.

In a different preferred embodiment of this invention the preparation of the crystalline hydrophobic metal organic frameworks of this invention comprise the following steps of mixing:
2. A solution containing one ore more metal salts (for example: sulfate, nitrate, nitrite, sulfite, bisulfite, phosphate, hydrogen phosphate, dihydrogene phosphate, diphosphate, triphosphate, phosphite, chloride, chlorate, bromide, bromate, iodide, iodate, carbonate, bicarbonate) containing metal ions from the lanthanide group: La, Ce, Pr, Nd, Sm, Eu, Gd, Tb, Dy, Ho, Er, Tm, Lu and Yb, which is mixed with an organic or inorganic solvent or a mixture of both, containing for example the following organic linker: tetraflouroterephthalic acid (**Formula 2**). 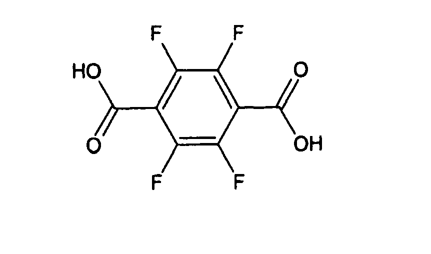 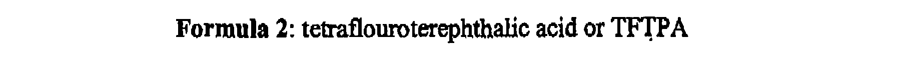
4. The mixture is heated at temperatures from 20 to 200°C in autoclave, with a reflux or in open beaker, with or without agitation for a period of time from 30 minutes to 1 month depending on the solvent selection.
5. The resulting solid is separated from its mother liquor by filtration, centrifugation, decantation or any separation method and washed with water, an organic solvent or organic-water mixtures.

In the preparation of the materials of this invention, the metal salt or mixture of salts (for example: sulfate, nitrate, nitrite, sulfite, bisulfite, phosphate, hydrogen phosphate, dihydrogene phosphate, diphosphate, triphosphate, phosphite, chloride, chlorate, bromide, bromate, iodide, iodate, carbonate, bicarbonate) containing metal ions from the lanthanide group: La, Ce, Pr, Nd, Sm, Eu, Gd, Tb, Dy, Ho, Er, Tm, Lu and Yb, and the organic linker which can be selected from : 4,4'-(1,1,1,3,3,3-hexafluoropropane-2,2-diyl)dibenzoic acid or tetraflouroterephthalic acid are added in a mole ratio of 0.1 to 10, preferably 0.2 to 5, more preferably 0.5 to 2 (lanthanide to organic linker).

The materials obtained by this preferred preparation present in their solvent free form the following chemical composition:
MO*_{z}*L*_{y}* where M is a lanthanide metal such as La, Ce, Pr, Nd, Sm, Eu, Gd, Tb, Dy, Ho, Er, Tm, Lu or Yb and mixture thereof, O is a oxygen bridge between two M atoms. The lanthanide atoms and oxygen atoms are arranged in such way that they form columns or layers instead of isolated clusters. L is 4,4'-(1,1,1,3,3,3-hexafluoropropane-2,2-diyl)dibenzoate or tetrafluoroterephthalic acid, which interconnects subsequent columns or layers. The z value can be varied between 0 and 3, preferably between 0 and 2 and more preferably between 0 and 1; and, *y* can be varied between 0.2 and 5, preferably between 0.33 and 3 and more preferably between 0.5 and 2.
Depending on the solvent used, the nature of the lanthanide atoms and the nature of the linker, different materials can be obtained. For instance, when the linker is 4,4'-(1,1,1,3,3,3-hexafluoropropane-2,2-diyl)dibenzoate, the lanthanide ions are selected from: Eu, Tb, Gd, Nd, Tm, Pr, Dy, Yb, Sm, Ho or Er and the solvent is dimethylformamide (DMF), ethanol or mixture of them with other solvents, the crystalline solid ITQMOF-1 is formed.
Depending of the synthesis conditions, several crystalline phases are formed which are also claimed in this invention. For instance, when water is used as solvent instead of DMF or ethanol in the synthesis procedure for the crystalline solid **ITQMOF-1,** a new crystalline solid, **ITQMOF-2** is formed.

When the linker is tetraflouroterephthalic acid, the lanthanide ions are selected from: Eu, Tb, Gd, Nd, Tm, Pr, Dy, Yb, Sm, Ho or Er and the solvent is dimethylformamide (DMF), ethanol, triethylamine or mixture of them with other solvents, the crystalline solid **ITQMOF-3** is formed.

The powder X-Ray diffraction pattern of the **ITQMOF-1** crystalline solid of the invention obtained using the copper K_{α1} line includes at least the diffraction peaks listed in the **Table 1.**

The relative intensity Iᵣₑₗ is given as a relative intensity scale to which the value of 100 is given to the most intense line of the X-ray diffraction pattern: vw<15; 15≤w<30; 30≤mw<50; 50≤m<65; 65≤S<85; VS≥85.

**Table 1. Main characteristic X ray diffraction peaks and relative intensities of ITQMOF-1 crystalline solid.**

| Pos. [°2Th.] ± 0.5 | Rel. Int. [%] |
|---|---|
| 4.8 | m |
| 8.3 | m |
| 9.6 | VS |
| 12.7 | mw |
| 14.3 | mw |
| 16.9 | vw |
| 17.3 | vw |
| 21.0 | vw |
| 22.0 | vw |
| 24.1 | vw |
| 25.1 | vw |
| 30.2 | vw |

The chemical formula of **ITQMOF-1** type of materials is ML_{1.5}, where M is La, Ce, Pr, Nd, Sm, Eu, Gd, Tb, Dy, Ho, Er, Tm and Yb and L is 4,4'-(1,1,1,3,3,3-hexafluoropropane-2,2-diyl)dibenzoate.

It should be understood that diffraction data listed for this material as single lines may consist of multiple overlapping lines which under certain conditions, such as differences in crystallographic changes may appear as resolved or partial resolved lines. Typically crystallographic changes can include minor changes in the unit cell parameters and/or a change in crystal symmetry, without a change in the structure. These minor effects, including changes in relative intensities, can also occur as a result of differences in framework composition, nature and degree of pore filling crystal size and shape, preferred orientation and thermal and/or hydrothermal history.

The powder X-Ray diffraction pattern of the **ITQMOF-2** crystalline solid of the invention obtained using the copper K_{αl} line includes at least the diffraction pears listed in the **Table 2.**

The relative intensity Iᵣₑₗ is given as a relative intensity scale to which the value of 100 is given to the most intense line of the X-ray diffraction, pattern: vw<15; 15≤w<30; 3O≤mw<50; 50≤m<65; 65≤S<85; VS≥85.

**Table 2. Main characteristic X ray diffraction peaks and relative intensities of ITQMOF-2 crystalline solid.**

| Pos. [°2Th.] ± 0.5 | Rel. Int. [%] |
|---|---|
| 5,9 | m |
| 7,0 | VS |
| 9,2 | VS |
| 10,9 | vw |
| 11,9 | vw |
| 12,1 | vw |
| 12,5 | v |
| 13,9 | m |
| 14,1 | mw |
| 15,3 | vw |
| 18,5 | vw |
| 20,9 | vw |
| 22,0 | vw |
| 26,6 | vw |
| 27,8 | vw |

The chemical formula of **ITQMOF-2** type of materials is ML_{1.5}, where M is La, Ce, Pr, Nd, Sm, Eu, Gd, Tb, Dy, Ho, Er, Tm and Yb and L is 4,4'-(1,1,1,3,3,3-hexafluoropropane-2,2-diyl)dibenzoate.

It should be understood that diffraction data listed for this material as single lines may consist of multiple overlapping lines which under certain conditions, such as differences in crystallographic changes may appear as resolved or partial resolved lines. Typically crystallographic changes can include minor changes in the unit cell parameters and/or a change in crystal symmetry, without a change in the structure. These minor effects, including changes in relative intensities, can also occur as a result of differences in framework composition, nature and degree of pore filling, crystal size and shape, preferred orientation and thermal and/or hydrothermal history.

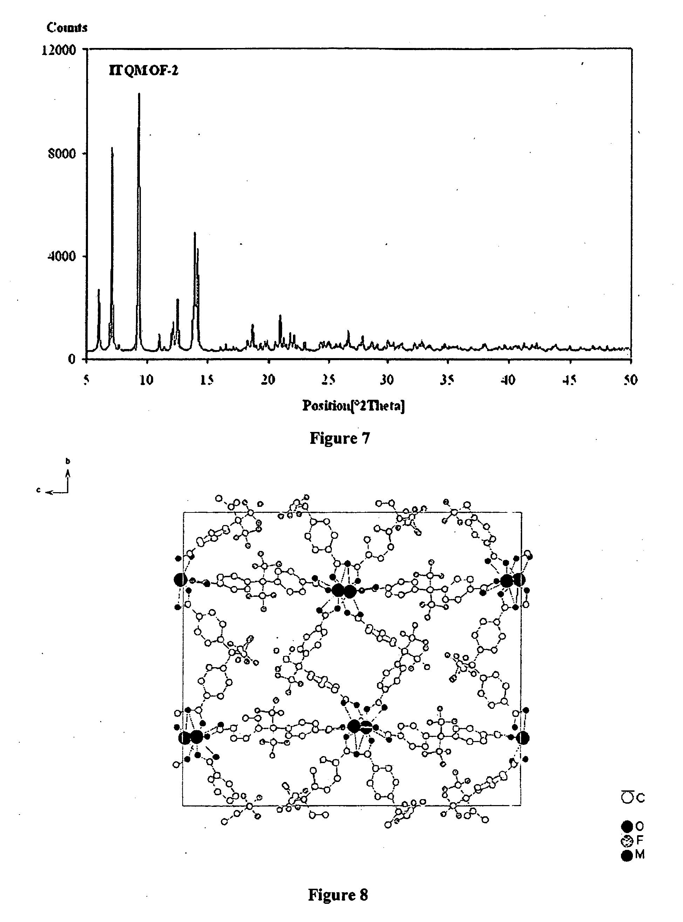

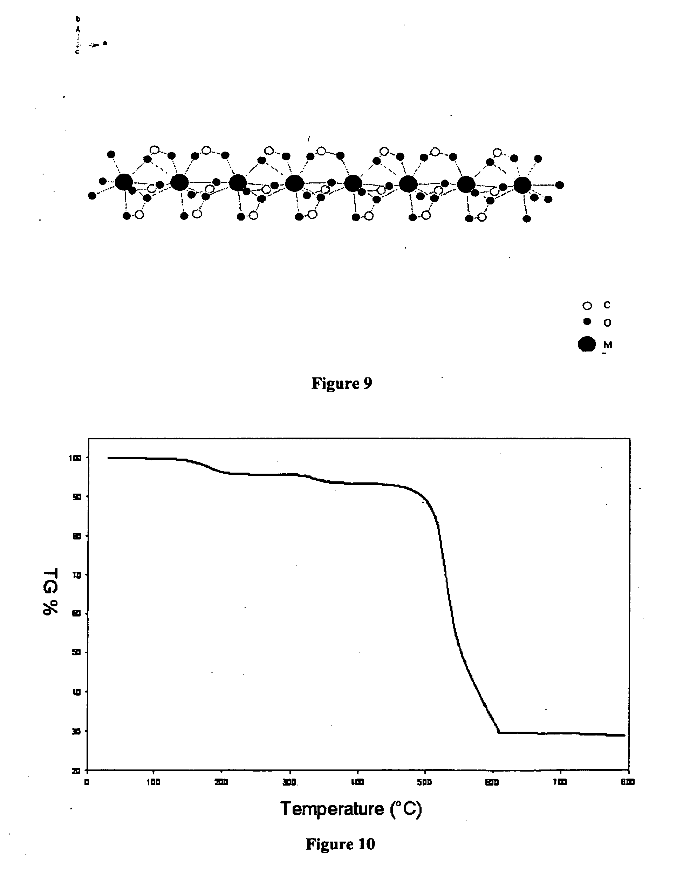

The **ITQMOF-2** crystallized solid according to the invention exhibits a new crystalline structure determined by X-ray single crystal analysis. The new crystalline structure **of ITQMOF-2** crystallized solid according to the invention is a three-dimensional structure and presents a one-dimensional system of micropores. The metal atoms are linked by oxygen atoms from carboxylic moieties of the ligand. The metal atoms, which are eight and nine coordinated in an alternative way, are forming continuous columns (see Figure 9). The ligands made the connection between the chains and create the microporosity (see Figure 8).

The powder X-Ray diffraction pattern of the **ITQMOF-3** crystalline solid of the invention obtained using the copper K_{α1} line includes at least the diffraction pears listed in the **Table 3.**

The relative intensity Iᵣₑₗ is given as a relative intensity scale to which the value of 100 is given to the most intense line of the X-ray diffraction pattern: vw<15; 15≤w<30; 30≤mw<50; 50≤m<65; 65≤S<85; VS≥85.

**Table 3. Main characteristic X ray diffraction peaks and relative intensities of ITQMOF-3 crystalline solid.**

| Pos. [°2Th.] ± 0.5 | Rel.,Int. [%] |
|---|---|
| 8.2 | VS |
| 8.7 | S |
| 12.1 | vw |
| 17.6 | w |
| 18.7 | vw |
| 19.4 | w |
| 23.7 | vw |
| 26.0 | w |
| 26.5 | vw |
| 27.3 | w |

It should be understood that diffraction data listed for this material as single lines may consist of multiple overlapping lines which under certain conditions, such as differences in crystallographic changes may appear as resolved or partial resolved lines. Typically crystallographic changes can include minor changes in the unit cell parameters and/or a change in crystal symmetry, without a change in the structure. These minor effects, including changes in relative intensities, can also occur as a result of differences in framework composition, nature and degree of pore filling, crystal size and shape, preferred orientation and thermal and/or hydrothermal history.

Another aspect of the invention is the use of the lanthanide-organic material as gas sensors. In particular, they can be used as photoluminescent sensors, for example for oxygen photoluminescent gas sensors an CO photoluminescent gas sensors.

Said materials are highly hydrophobic. When these materials contain at least a fluorescent lanthanide, they present a luminescence. This luminescence is maintained even in presence of water.

When these materials contain at least a magnetic lanthanide, they present magnetic properties.

When these materials contain both photoluminescence and magnetic lanthanide they present magnetic properties and can be oriented under a magnetic field.

The materials claimed in this invention can be used for different applications like: photoluminescent sensors, magnetic sensors, photoluminescent and magnetic sensors, data storage devices, optical amplifiers, lasers, electroluminescent devices, catalysis, gas purification, gas storage, gas separation.

The materials claimed in this invention can be used for different applications like: photoluminescent sensors, magnetic sensors, photoluminescent and magnetic sensors, data storage devices, optical amplifiers, lasers, electroluminescent devices, catalysis, gas purification, gas storage, gas separation.

Other uses of the lanthanide-organic materials of the invention are for examples, for the manufacturing of light conversion molecular devices, or they can be used as fluorescent materials in plasma screens, as well as in the manufacturing of electroluminescent devices.

The new family of materials has high temperature stability, since they retain their structures up to temperatures of about 500°C. At the same time, the materials of the present invention are hydrophobic and the luminescence is not quenched in the presence of water or organic solvents. They are stable at different pH conditions and in solvents and can be obtained in high yields, which is very important for the industrial applications. The preparation consists of mixing of at least one lanthanide salt or mixture of different lanthanide salts and the appropriate fluorine containing organic linker in a solvent like water, mixtures of water and organic solvent, or mixtures of organic solvents. The organic linkers are multidentate organic linkers which at least contain one fluoride atom in their composition.

These porous lanthanide-organic materials are obtained by heating this type of mixture for different periods of time. The materials are directly obtained with fully accessible pores when the solvent is water. According to other embodiments, the solvent present in the pores is eliminated very easily from crystallized materials by heating the sample under vacuum, or under flow of, for instance, an inert gas or air. The lanthanide-organic materials obtained are luminescent under UV light when the metals are preferably Sm, Eu, Tb, Tm and their mixtures or less preferably Ce, Pr, Nd, Er, Dy, Yb, and mixture thereof. Also, these new solids present magnetic properties when the metal is Nd, Sm, Tb, Gd, Er, Tm and their mixtures. And finally, they have both luminescent and magnetic properties when the metal is Sm, Tb, Nd, Er, Tm or their mixtures. The materials of the invention are also hydrophobic and they can be used for different applications like: photoluminescent sensors, magnetic sensors, photoluminescent and magnetic sensors, data storage devices, optical amplifiers, lasers, electroluminescent devices, catalysis, gas purification, gas storage, gas separation. The presence of the chains or layers in which the lanthanide metals are located confer to these solids of strong emittance when compared to previously reported MOFs, in which lanthanide atoms are located in small clusters.

### Brief Description of Figures

**Fig. 1****.:** provides the pictures of the **ITQMOF-1 Eu** crystals under normal light (left) and under UV light (right).
**Fig. 2****.:** provides the pictures of the **ITQMOF-2 Eu** crystals under normal light (left) and under UV light (right).
**Fig. 3****.:** provides the pictures of the **ITQMOF-1 Tb** crystals under normal light (left) and under UV light (right).
Fig. 4.: provides the pictures of the **ITQMOF-1 Tb-Eu** crystals under UV light.
**Fig. 5****.:** provides the X-ray powder diffraction of the material obtained in the **Example 1 (ITQMOF-1 Eu**).
**Fig. 6****:** provides the X-ray powder diffraction of the material obtained in the **Example 1 (ITQMOF-1 Eu)** at different temperatures.
**Fig. 7****.:** provides the X-ray powder diffraction of the material obtained in the **Example 2 (ITQMOF-2 Eu**).
**Fig. 8****.:** provides the structure of the **ITQMOF-2** material where **M** is the lanthanide metal.
**Fig. 9****:** provides the connectivity between the lanthanide atoms in the structure of the **ITQMOF-2** material where **M** is the lanthanide metal.
**Fig. 10****.:** provides the thermogravimetric analysis of the **ITQMOF-1** material.
**Fig. 11****.:** provides the thermogravimetric analysis of the **ITQMOF-2** material.
**Fig. 12****.:** provides the thermogravimetric analysis of the **ITQMOF-2** material after calcinations at 300°C and treatment with saturated water vapors.
**Fig. 13****.:** provides the emission spectrum of the **ITQMOF-1 Eu** material at different excitation wavelengths.
**Fig. 14****.:** provides the emission spectrum of the **ITQMOF-1 Tb** material at different excitation wavelengths.
**Fig. 15****.:** provides the variation of the fluorescence of the **ITQMOF-1** type material under alternative steams of nitrogen and oxygen.
**Fig. 16****.:** provides the variation of the fluorescence of the **ITQMOF-1** type material under alternative steams of air and air-ethanol.
**Fig. 17****.:** provides the variation of the fluorescence of the **ITQMOF-1** type material under alternative steams of water and water-phenol solution.
**Fig. 18****.:** provides the dependence of the total emission intensity integrated from the **ITQMOF-1 Eu** powder versus the pump pulse intensity.
**Fig. 19****.:** provides the X-ray powder diffraction of the material obtained in the **Example 12 (ITQMOF-3 Eu).**
**Fig. 20****.:** provides the thermogravimetric analysis of the **ITQMOF-3-Eu** material obtained in the **Example 12**.

### Examples

These examples describe the synthesis of porous hydrophobic photoluminescent and or magnetic lanthanide-organic frameworks and are not meant to limit in any way the scope of this invention.

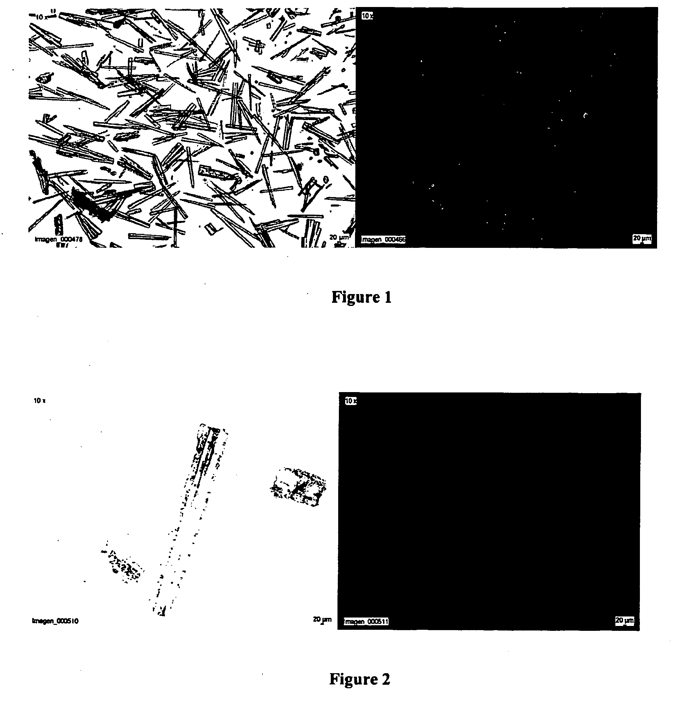

**Example 1:** a solution of EuCl₃ in water is mixed with a solution of 4,4'-(1,1,1,3,3,3-hexafluoropropane-2,2-diyl)dibenzoic acid (HFIPBB) in dimethylformamide (DMF) to give the following molar ratio: 1 Eu: 1 HFIPBB: 130 DMF: 190 H₂O. The mixture is heated at 150°C in a stainless steel autoclave with a Teflon liner for 14 hours. After this period the autoclave is cooled to room temperature and the product is washed several times with DMF and water, filtered and dried at 120°C for 12 hours. The product (**ITQMOF-1 Eu**) is presented as needle like white crystals with a red fluorescence in UV light (see Figure 1). The yield of the reaction is 0.9. These crystals are insoluble in water and common organic solvents. To liberate the porosity the powder obtained is heated at 150°C under vacuum of 10⁻³ mbar for 3 hours.

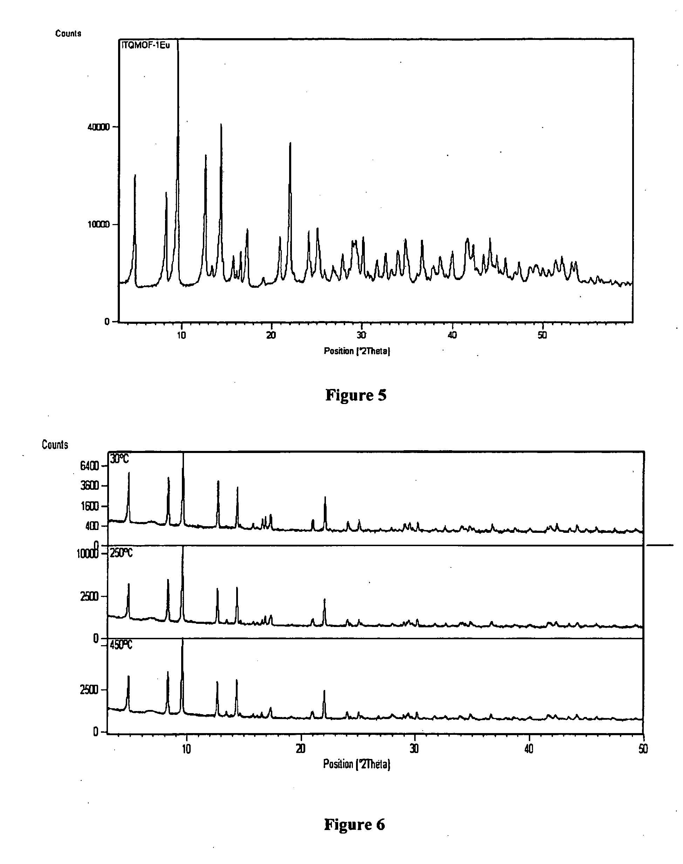

The powder X-Ray diffraction pattern of the sample obtained mounted in a capillary and using the copper K_{α1} line is presented in Figure 5 and a list of the most important peaks is presented in Table 4. The relative intensity Iᵣₑₗ is given as a relative intensity scale to which the value of 100 is given to the most intense line of the X-Ray diffraction pattern: vw<15; 15≤w<30; 30≤mw<50; 50≤m<65; 65≤S<85; VS≥85.

**Table 4. 2-theta angles, dₕₖₗ-spacing list and relative intensities measured for a typical X-Ray diffraction diagram for the ITQMOF-1 crystalline solid.**

| **2-Theta** | **dₕₖₗ** | **Iᵣₑₗ** |
|---|---|---|
| 4.8003 | 18.40898 | m |
| 6.6699 | 13.25249 | vw |
| 8.3048 | 10.64684 | mw |
| 9.5892 | 9.22346 | VS |
| 12.6868 | 6.97759 | mw |
| 14.3924 | 6.15434 | mw |
| 15.7837 | 5.61482 | vw |
| 16.6283 | 5.33149 | vw |
| 16.8919 | 5.24887 | vw |
| 17.3418 | 5.11371 | vw |
| 20.9647 | 4.23748 | vw |
| 22.0387 | 4.03335 | w |
| 24.0692 | 3.69750 | vw |
| 25.0522 | 3.55460 | vw |
| 26.9011 | 3.31435 | vw |
| 27.8380 | 3.20489 | vw |
| 28.9759 | 3.08157 | vw |
| 29.4321 | 3.03484 | vw |
| 30.1849 | 2.96085 | vw |
| 31.7769 | 2.81605 | vw |
| 32.5665 | 2.74955 | vw |
| 33.9663 | 2.63937 | vw |
| 34.7481 | 2.58176 | vw |
| 36.6938 | 2.44921 | vw |
| 38.6804 | 2.32787 | vw |
| 39.9877 | 2.25473 | vw |
| 41.5071 | 2.17565 | vw |
| 41.7727 | 2.16242 | vw |
| 42.3318 | 2.13338 | vw |
| 43.5037 | 2.08031 | vw |
| 44.1330 | 2.05210 | vw |
| 44.9304 | 2.01752 | vw |
| 45.8269 | 1.98011 | vw |
| 47.3959 | 1.91816 | vw |
| 48.5281 | 1.87602 | vw |
| 49.2772 | 1.84924 | vw |
| 51.4301 | 1.77678 | vw |
| 52.1622 | 1.75355 | vw |
| 53.1994 | 1.72179 | vw |
| 53.6296 | 1.70757 | vw |
| 4.8003 | 18.40898 | m |
| 6.6699 | 13.25249 | vw |
| 8.3048 | 10.64684 | mw |
| 9.5892 | 9.22346 | VS |
| 12.6868 | 6.97759 | mw |
| 14.3924 | 6.15434 | mw |
| 15.7837 | 5.61482 | vw |
| 16.6283 | 5.33149 | vw |
| 16.8919 | 5.24887 | vw |
| 17.3418 | 5.11371 | vw |
| 20.9647 | 4.23748 | vw |
| 22.0387 | 4.03335 | w |
| 24.0692 | 3.69750 | vw |
| 25.0522 | 3.55460 | vw |
| 26.9011 | 3.31435 | vw |
| 27.8380 | 3.20489 | vw |
| 28.9759 | 3.08157 | vw |
| 29.4321 | 3.03484 | vw |
| 30.1849 | 2.96085 | vw |

| | | |
|---|---|---|
| In which VS = very strong; S = strong, m = medium; mw = medium weak w = weak; vw = very weak | | |

Thermal gravimetric analysis of this sample (see Figure 10), showed clearly two weight losses the first (4.2 %) around 200°C and the second (2.4 %) around 350°C corresponding to the elimination of DMF molecules. The loss of the microporous structure of the material did not occur until 500°C as evidenced by another weight loss of a total 72 % corresponding to the decomposition of the ligand. These weight losses as well as the elemental analysis are consistent to the formula C₅₁H₂₄Eu₂F₁₈O₁₂ for the solvent free ITQMOF-1 materials.

The material structure and microporosity remains intact at temperatures lower than 450°C, verified by X-Ray diffraction see Figure 6 and nitrogen adsorption experiments. Indeed, the micropore volume of this sample is 0.09 cc/g.

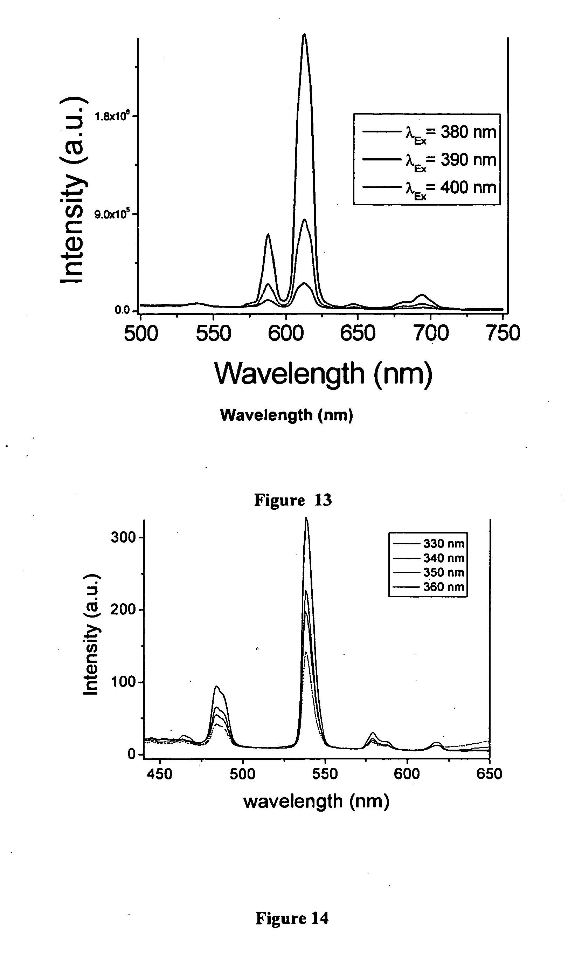

The emission spectrum of this sample is shown in Figure 13 and is characteristic for the europium.

**Example 2:** a solution of EuCl₃ in water is mixed with 4,4'-(1,1,1,3,3,3-hexafluoropropane-2,2-diyl)dibenzoic acid (HFIPBB) powder to give the following molar ratio: 1 Eu: 1 HFIPBB: 7000 H₂O. The mixture is heated at 150°C in a stainless steel autoclave with a Teflon liner for 20 days. After this period the autoclave is cooled to room temperature and the product is washed several times with DMF and water, filtered and dried at 120°C for 12 hours. The product (**ITQMOF-2** Eu) is presented as white crystals (needle like 10 µm x 200µm with hexagonal section) with a red fluorescence in UV light (see Figure 2). The yield of the reaction is 0.95. These crystals are insoluble in water and common organic solvents.

The powder X-Ray diffraction pattern of the sample obtained using the copper K_{α1} line is presented in Figure 7 and a list of the most important peaks is presented in **Table 5.**
The relative intensity Iᵣₑₗ is given as a relative intensity scale to which the value of 100 is given to the most intense line of the X-ray diffraction diagram: vw<15; 15≤w<30; 30≤mw<50; 50≤m<65; 65≤S<85; VS≥85.

**Table 5. Mean values for dₕₖₗ and relative intensities measured for an X ray diffraction diagram for the ITQMOF-2 crystalline solid.**

| **2-Theta** | **dₕₖₗ** | **Iᵣₑₗ** |
|---|---|---|
| 4.62 | 19.117 | vw |
| 5.99 | 14.752 | m |
| 7.04 | 12.546 | VS |
| 9.25 | 9.558 | VS |
| 10.99 | 8.048 | vw |
| 11.99 | 7.377 | vw |
| 12.16 | 7.275 | vw |
| 12.50 | 7.077 | w |
| 13.92 | 6.359 | mw |
| 14.12 | 6.272 | mw |
| 15.34 | 5.773 | vw |
| 16.01 | 5.532 | vw |
| 17.92 | 4.949 | vw |
| 18.04 | 4.916 | vw |
| 18.25 | 4.859 | vw |
| 18.39 | 4.824 | vw |
| 18.58 | 4.773 | vw |
| 18.68 | 4.748 | vw |
| 19.33 | 4.589 | vw |
| 19.66 | 4.515 | vw |
| 19.86 | 4.470 | vw |
| 20.92 | 4.244 | vw |
| 21.24 | 4.182 | vw |
| 21.41 | 4.148 | vw |
| 21.79 | 4.077 | vw |
| 22.09 | 4.023 | vw |
| 22.97 | 3.876 | vw |
| 24.27 | 3.666 | vw |
| 24.39 | 3.646 | vw |
| 24.68 | 3.614 | vw |
| 24.95 | 3.567 | vw |
| 25.02 | 3.558 | vw |
| 25.17 | 3.538 | vw |
| 25.36 | 3.512 | vw |
| 25.57 | 3.483 | vw |
| 25.76 | 3.458 | vw |
| 25.92 | 3.437 | vw |
| 26.42 | 3.372 | vw |
| 26.63 | 3.345 | vw |
| 26.86 | 3.318 | vw |
| 27.12 | 3.287 | vw |
| 27.50 | 3.242 | vw |
| 27.83 | 3.205 | vw |
| 28.45 | 3.136 | vw |
| 28.60 | 3.120 | vw |
| 29.10 | 3.068 | vw |
| 29.67 | 3.010 | vw |
| 29.96 | 2.979 | vw |
| 30.02 | 2.981 | vw |
| 30.26 | 2.950 | vw |
| 30.48 | 2.930 | vw |
| 30.74 | 2.905 | vw |
| 30.83 | 2.897 | vw |
| 31.06 | 2.876 | vw |
| 31.15 | 2.875 | vw |
| 31.21 | 2.870 | vw |
| 32.24 | 2.773 | vw |
| 32.59 | 2.744 | vw |
| 32.83 | 2.725 | vw |
| 32.99 | 2.719 | vw |
| 33.26 | 2.691 | vw |
| 33.54 | 2.669 | vw |
| 34.71 | 2.582 | vw |
| 37.86 | 2.375 | vw |
| 38.00 | 2.365 | vw |
| 40.54 | 2.221 | vw |
| 41.22 | 2.187 | vw |
| 41.88 | 2.155 | vw |
| 42.23 | 2.137 | vw |
| 43.81 | 2.064 | vw |
| 44.96 | 2.014 | vw |
| 46.82 | 1.938 | vw |
| 49.76 | 1.830 | vw |

| | | |
|---|---|---|
| In which VW = very strong; m = mean; w = weak, S = strong; mw = medium weak; vw = very weak | | |

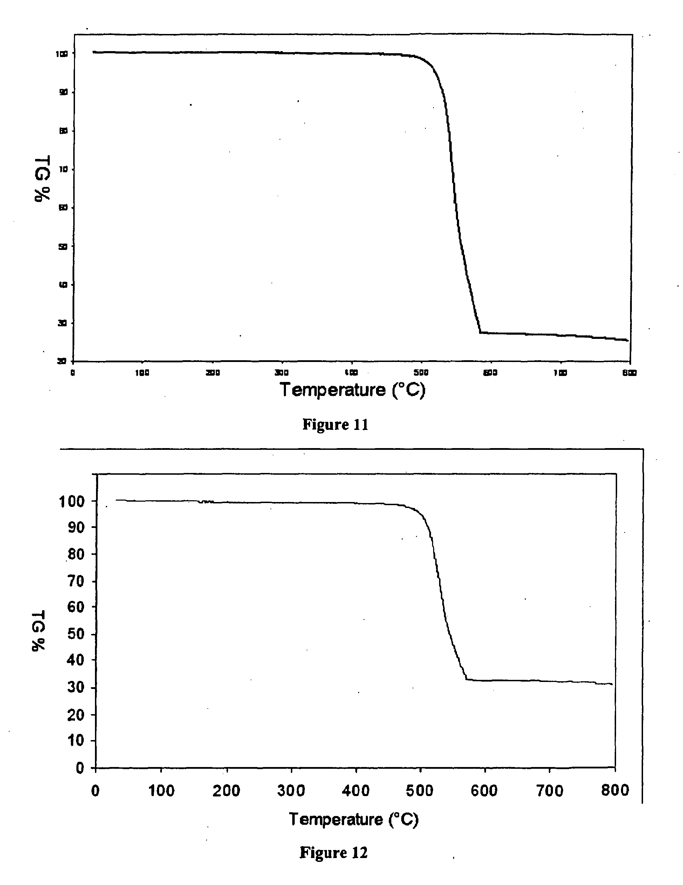

Thermal gravimetric analysis of this sample show in the Figure 11, showed only one weight loss of 69.1 % around 520°C corresponding to the loss of the microporosity of the material (decomposition of the ligand). These weight losses and elemental analysis are consistent to the following chemical formula: C₅₁H₂₄Eu₂F₁₈O₁₂ for the solvent free **ITQMOF-2** materials.

The material structure and microporosity remains intact up to temperatures close to 450°C (verified by X-Ray diffraction and nitrogen adsorption).

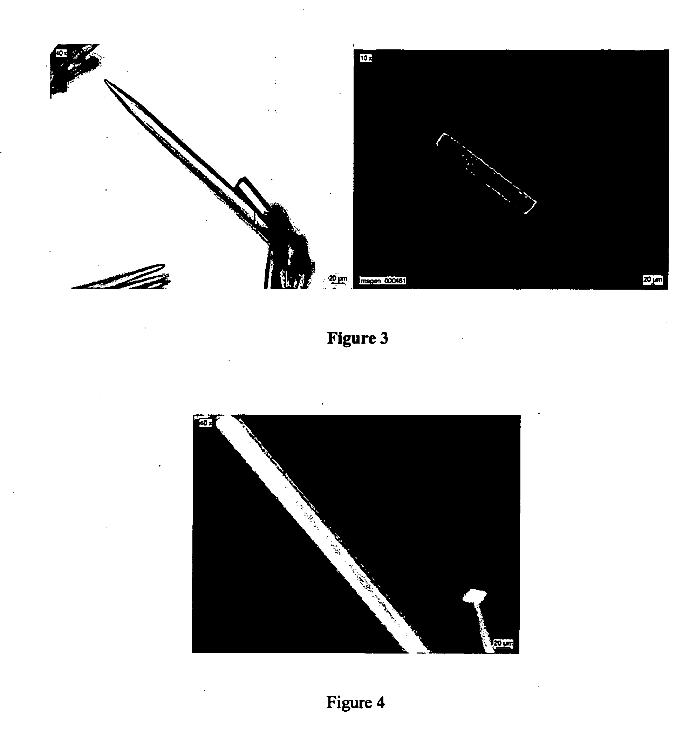

**Example 3:** a solution of TbCl₃ in water is mixed with a solution of 4,4'-(1,1,1,3,3,3-hexafluoropropane-2,2-diyl)dibenzoic acid (HFIPBB) in dimethylformamide (DMF) to give the following molar ratio: 1 Tb: 1 HFIPBB: 130 DMF: 190 H₂O. The mixture is heated at 150°C in a stainless steel autoclave with a Teflon liner for 14 hours. After this period the autoclave is cooled to room temperature and the product is washed several times with DMF and water, filtered and dried at 120°C for 12 hours. The product (**ITQMOF-1 Tb**) is presented as needle like white crystals with a green fluorescence in UV light (see Figure 3). Also, the crystals are oriented when a magnetic field is applied to the sample The yield of the reaction is 0.9. These crystals are insoluble in water and common organic solvents. The X-Ray powder diffraction data collected for this sample and its elemental analysis indicates that the Tb containing material is isostructural to the material presented in the **Example 1.** The emission spectrum of this sample is shown in **Figure 14** and is characteristic for the terbium.

**Example 4:** a solution of Gd(NO₃)₃ in water is mixed with a solution of 4,4'-(1,1,1,3,3,3-hexafluoropropane-2,2-diyl)dibenzoic acid (HFIPBB) in dimethylformamide (DMF) to give the following molar ratio: 1 Gd: 1 HFIPBB: 130 DMF: 190 H₂O. The mixture is heated at 150°C in a stainless steel autoclave with a Teflon liner for 14 hours. After this period the autoclave is cooled to room temperature and the product is washed several times with DMF and water, filtered and dried at 120°C for 12 hours. The product (**ITQMOF-1 Gd**) is presented as needle like white crystals. The yield of the reaction is 0.9. These crystals are insoluble in water and common organic solvents. The crystals are oriented when a magnetic field is applied to the sample indicating its utility for data storage purposes. The X-Ray powder diffraction data collected for this sample corresponds to that of the material presented in the **Example 1.**

**Example 5:** a solution of EuCl₃ in water is mixed with a solution a solution of TbCl₃ in water and with 4,4'-(1,1,1,3,3,3-hexafluoropropane-2,2-diyl)dibenzoic acid (HFIPBB) in diinethylformamide (DMF) to give the following molar ratio: 0.05 Eu: 0.95 Tb: 1 HFIPBB: 130 DMF: 190 H₂O. The mixture is heated at 150°C in a stainless steel autoclave with a Teflon liner for 14 hours. After this period the autoclave is cooled to room temperature and the product is washed several times with DMF and water, filtered and dried at 120°C for 12 hours. The product **(ITQMOF-1 Tb-Eu**) is presented as needle like white crystals with a yellow-red fluorescence in UV light (see Figure 4). Also, these crystals are oriented under a magnetic field. The yield of the reaction is 0.9. These crystals are insoluble in water and common organic solvents. The X-Ray powder diffraction data collected for this sample corresponds to that of the ITQMOF-1 material presented in the **Example 1**

**Example 6:** a solution of EuCl₃ in water is mixed with a solution of 4,4'-(1,1,1,3,3,3-hexafluoropropane-2,2-diyl)dibenzoic acid (HFIPBB) in dimethylformamide (DMF) to give the following molar ratio: 1 Eu: 1 HFIPBB: 3000 DMF: 50 H₂O. The mixture is heated at 130°C in a glass vessel with a reflux system for 14 hours. After this period the vessel is cooled to room temperature and the product is washed several times with DMF and water, filtered and dried at 120°C for 12 hours. The product (**ITQMOF-1 Eu**) is presented as needle like white crystals with a red fluorescence in UV light. The yield of the reaction is 0.9. These crystals are insoluble in water and common organic solvents. The X-Ray powder diffraction data collected for this sample corresponds to that of the material presented in the **Example 1**.

**Example 7:** a solution of NdCl₃ in water is mixed with a solution of 4,4'-(1,1,1,3,3,3-hexafluoropropane-2,2-diyl)dibenzoic acid (HFIPBB) in dimethylformamide (DMF) to give the following molar ratio: 1 Nd: 1 HFIPBB: 130 DMF: 190 H₂O. The mixture is heated at 150°C in a stainless steel autoclave with a Teflon liner for 14 hours. After this period the autoclave is cooled to room temperature and the product is washed several times with DMF and water, filtered and dried at 120°C for 12 hours. The product (**ITQMOF-1 Nd**) is presented as needle like white crystals. The yield of the reaction is 0.9. These crystals are insoluble in water and common organic solvents.
The X-Ray powder diffraction data collected for this sample corresponds to that of the **ITQMOF-1** material presented in the **Example 1** with some impurities of Nd formiate.

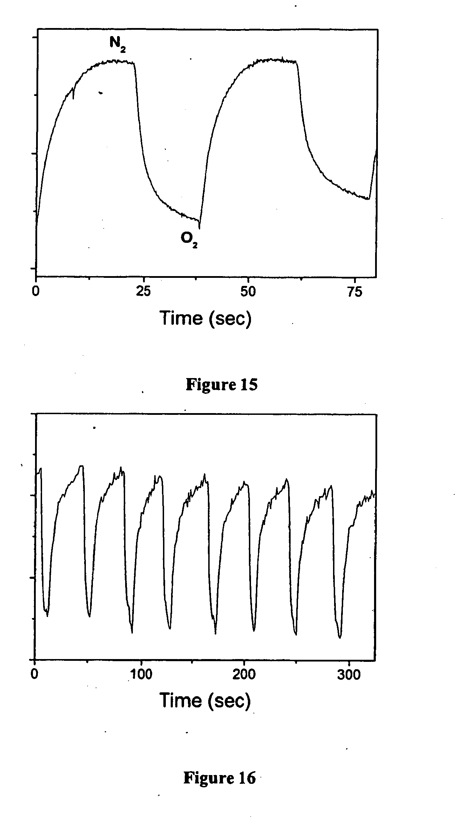

**Example 8.** The material prepared as described in example 1 was contacted with a flow of nitrogen and the photoluminescence spectrum shows an emission band at 610 nm. This band decreases its intensity by a factor of four, when the sample is exposed to a flow of oxygen and nitrogen in a volume ratio of 1:3. The original spectrum is fully recovered in twelve seconds, upon switching the oxygen flow off. The profile of the intensity of the 610 band emission of Eu-ITQMOF-1 is presented in Figure 15 when the sample is exposed to O₂ and the recovering of the signal when the O₂ is removed out from the N₂ flow.

**Example 9.** The photoluminescence signal of a material prepared as described in example 1 decreases by a factor of 4.5 upon exposing said material to a vapor pressure of ethanol of 25 mbar in air. The emission band returns to its original intensity in 10 seconds by removing the ethanol from the flow. The profile of the intensity of the 610 band emission of Eu-ITQMOF-1 is presented in Figure 16 when the sample is exposed to ethanol vapors and the recovering of the signal when the ethanol is removed out from the air flow.

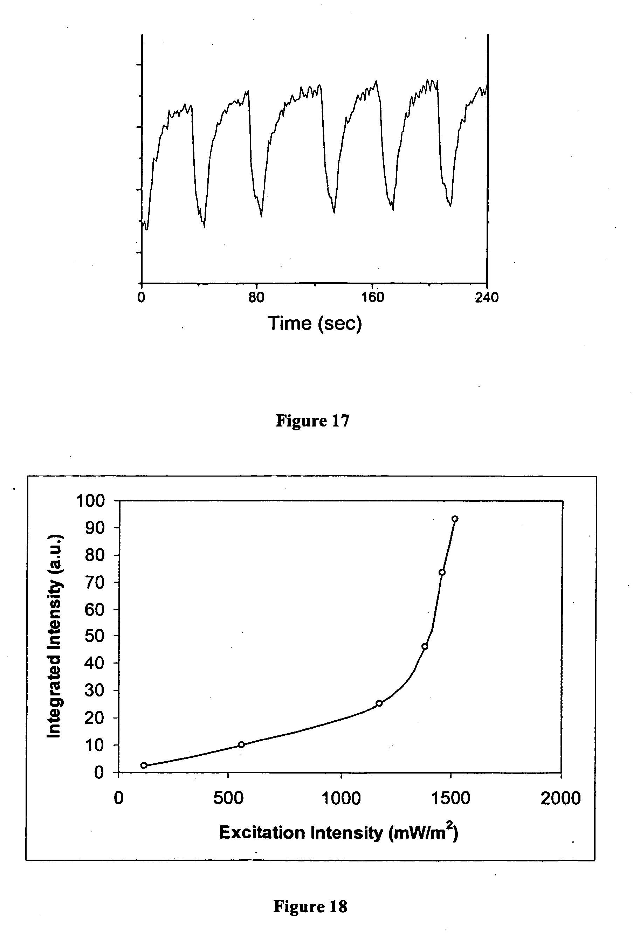

**Example 10.** The photoluminescence signal of a material prepared as described in **Example 1** decreass by a factor of 3 upon exposing said material to a flow of a solution of phenol in water (1 mMol). The emission returns to its original intensity in 20 seconds when the flow is changed to pure water. The profile of the intensity of the 610 band emission of Eu-ITQMOF-1 is presented in Figure 17

**Example 11**. Figure 18 shows the dependence of the total emission intensity integrated for a powder material prepared as described in **Example 1** versus the pump pulse intensity. The integrated intensity increased much more rapidly with the pump power. This data of the emission spectrum that is very sharp suggest that laser action occurs in the material. The samples were optically pumped by the third harmonic (355 nm) of *Q*-switched Nd:YAG laser (Spectron Laser Systems, UK; pulse width ca. 9 ns).

**Example 12:** a solution of EuCl₃ in water is mixed with a solution of tetraflouroterephthalic acid in ethanol to give the following molar ratio: 1 Eu: 1 TFTPA: 130 EtOH: 190 H₂O. The solid was precipitated by the slow addition of triethylamine. The product (**ITQMOF-3 Eu**) is presented as white powder with a red fluorescence in UV light. The yield of the reaction is 0.9. This solid is insoluble in water and common organic solvents. To liberate the porosity the powder obtained is heated at 150°C under vacuum of 10⁻³ mbar for 3 hours.

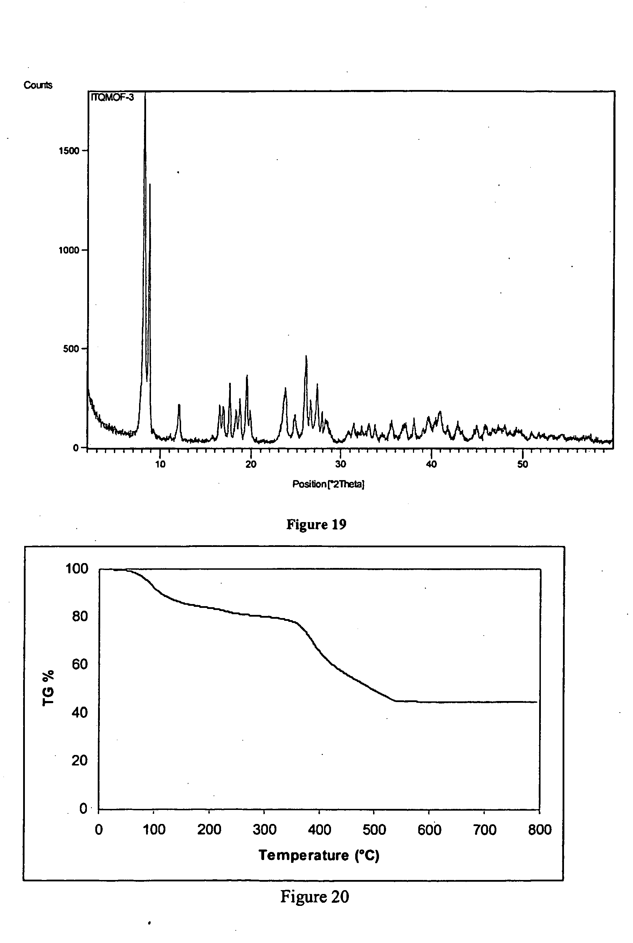

The powder X-Ray diffraction pattern of the sample obtained using the copper K_{α1} line is presented in Figure 19 and a list of the most important peaks is presented in **Table 6**. The relative intensity Iᵣₑₗ is given as a relative intensity scale to which the value of 100 is given to the most intense line of the X-Ray diffraction pattern: vw<15; 15≤w<30; 30≤mw<50; 50≤m<65; 65≤S<85; VS≥85.

**Table 6. 2-theta angles, dₕₖₗ-spacing list and relative intensities measured for a typical X-Ray diffraction diagram for the ITQMOF-3 crystalline solid.**

| **2-Theta** | **dₕₖₗ** | **Iᵣₑₗ** |
|---|---|---|
| 8.24 | 10.726 | VS |
| 8.79 | 10.054 | S |
| 12.08 | 7.326 | vw |
| 16.54 | 5.358 | vw |
| 16.94 | 5.233 | vw |
| 17.63 | 5.028 | w |
| 18.32 | 4.841 | vw |
| 18.74 | 4.734 | vw |
| 19.48 | 4.555 | w |
| 19.89 | 4.462 | vw |
| 23.29 | 3.818 | vw |
| 23.75 | 3.746 | vw |
| 24.73 | 3.598 | vw |
| 26.01 | 3.425 | w |
| 26.56 | 3.355 | vw |
| 27.30 | 3.266 | w |
| 27.86 | 3.202 | vw |
| 28.32 | 3.150 | vw |
| 30.85 | 2.897 | vw |
| 31.39 | 2.849 | vw |
| 33.15 | 2.702 | vw |
| 33.77 | 2.653 | vw |
| 35.63 | 2.519 | vw |
| 36.89 | 2.436 | vw |
| 37.20 | 2.416 | vw |
| 38.06 | 2.364 | vw |
| 39.63 | 2.273 | vw |
| 40.42 | 2.231 | vw |
| 40.96 | 2.203 | vw |
| 42.83 | 2.111 | vw |
| 45.01 | 2.014 | vw |
| 45.82 | 1.980 | vw |
| 49.67 | 1.835 | vw |
| 51.01 | 1.790 | vw |
| 54.35 | 1.686 | vw |

| | | |
|---|---|---|
| In which VS = very strong; S = strong, m = medium; mw = medium weak w = weak; vw = very weak | | |

Thermal gravimetric analysis of this sample (see Figure 20), showed clearly two weight losses the first (15.6 %) around 100°C and the second (3.4 %) around 210°C corresponding to the elimination of solvent molecules. The loss of the microporous structure of the material did not occur until 310°C as evidenced by another weight loss of a total 36 % corresponding to the decomposition of the ligand.

## Claims

1. A hydrophobic porous lanthanide-organic material **characterized in that** it comprises columns or layers wherein the lanthanide atoms are located, said columns or layers are kept apart from each other by the presence of fluorinated organic linkers, said lickers containing at least two functional groups able to donate electrons.

2. A hydrophobic porous lanthanide-organic material according to claim 1, **characterized in that** the functional groups are selected from among carboxylate, sulfonate, amines and mixtures thereof.

3. A hydrophobic porous lanthanide-organic material according to claim 1, **characterized in that** the functional groups are secondary amines.

4. A hydrophobic porous lanthanide-organic material according to claim 1, **characterized in that** the lanthanide metal is selected from among La, Ce Pr, Nd, Sm, Eu, Gd, Tb, Dy, Ho, Er, Tm, Lu, Yb and mixtures thereof.

5. A hydrophobic porous lanthanide-organic material according to claim 2, **characterized in that** the lanthanide metal is chosen between La, Ce Pr, Nd, Sm, Eu, Gd, Tb, Dy, Ho, Er, Tm, Lu and Yb and the organic linker placed between subsequent columns or layers has the general formula
wherein *X* is a functional organic group able to donate electrons, *A* is an organic linker that contains at least one fluorine atom in its composition and *n* is the number of functionalities linked to the *A* spacer and is comprised between 2 and 6.

6. A hydrophobic porous Lanthanide-organic material according to any of the preceding claims, **characterized in that** the organic linker has one or more aromatic rings and a portion of hydrogen atoms present on the aromatic rings are partially or completely substituted.

7. A hydrophobic porous Lanthanide-organic material according to claim 6, **characterized in that** the hydrogen atoms present on the aromatic rings are partially or completely substituted with substituents selected from among Cl, Br, I and mixtures thereof.

8. A hydrophobic porous Lanthanide-organic material according to claim 1, **characterized in that** the lanthanide metal is selected from among La, Ce Pr, Nd, Sm, Eu, Gd, Tb, Dy, Ho, Er, Tm, Lu and Yb and mixtures thereof and the organic linker is 4,4'-(1,1,1,3,3,3-hexafluoropropane-2,2-diyl)dibenzoic acid (HFIPBB).

9. A hydrophobic porous Lanthanide-organic material according to claim 1, **characterized in that** it contains 4,4'-(1,1,1,3,3,3-hexafluoropropane-2,2-diyl)dibenzoate as organic linker, and **in that** it shows at least the following X-Ray diffraction lines in its X-Ray pattern:
| Pos. [°2Th.] ± 0.5 | Rel. Int. [%] |
|---|---|
| 4.7 | S |
| 8.2 | M |
| 9.5 | VS |
| 12.6 | Mw |
| 14.3 | Mw |
| 22.0 | W |
| 24.0 | Vw |
| 25.0 | Vw |
| 29.2 | Vw |
wherein the relative intensities are referred to the most intense line, which has 100% intensity and vw<15; 15≤w<30; 30≤mw<50; 50≤m<65; 65≤S<85; VS≥85.

10. A hydrophobic porous Lanthanide-organic material according to claim 1, **characterized in that** it contains 4,4'-(1,1,1,3,3,3-hexafluoropropane-2,2-diyl)dibenzoate as organic linker, and **in that** it shows at least the following X-Ray diffraction lines in its X-Ray pattern:
| Pos. [°2Th.] ± 0.5 | Rel. Int. [%] |
|---|---|
| 5,9 | m |
| 7,0 | VS |
| 9,2 | VS |
| 10,9 | vw |
| 11,9 | vw |
| 12,1 | vw |
| 12,5 | v |
| 13,9 | m |
| 14,1 | mw |
| 15,3 | vw |
| 18,5 | vw |
| 20,9 | vw |
| 22,0 | vw |
| 26,6 | vw |
| 27,8 | vw |
wherein the relative intensities are referred to the most intense line, which has 100% intensity and vw<15; 15≤w<30; 30≤mw<50; 5O≤n<65; 65≤5<85; VS≥85.

11. A porous lanthanide organic material according to claim 10, **characterized in that** the lanthanide metal is selected from among La, Ce, Pr, Nd, Sm, Eu, Gd, Tb, Dy, Ho, Er, Tm, Yb, Lu and mixtures thereof.

12. A hydrophobic porous lanthanide-organic material according to claim 1, **characterized in that** the lanthanide metal is selected from among La, Ce Pr, Nd, Sm, Eu, Gd, Tb, Dy, Ho, Er, Tm, Lu and Yb and mixtures thereof and the organic linker is tetraflouroterephthalic acid (TFTPA).

13. A hydrophobic porous lanthanide-organic material according to claim 1, **characterized in that** it contains tetraflouroterephthalic acid as organic linker, and **in that** it shows at least the following X-Ray diffraction lines in its X-Ray pattern:
| Pos. [°2Th.] ± 0.5 | Rel. Int. [%] |
|---|---|
| 8.2 | VS |
| 8.7 | S |
| 12.1 | vw |
| 17.6 | w |
| 18.7 | vw |
| 19.4 | w |
| 23.7 | vw |
| 26.0 | w |
| 26.5 | vw |
| 27.3 | w |
wherein the relative intensities are referred to the most intense line, which has 100% intensity and vw<15; 15≤w<30; 30≤mw<50; 50≤m<65; 65≤S<85 ; VS≥85.

14. A porous lanthanide organic material according to claim 1, **characterized in that** in the solvent free form has a formula corresponding to
MT_{z}L_{y}
wherein M is one or more lanthanide metals, T is an atom selected from among O, S and N acting as a bridge between two M atoms, and L is the fluorinated organic linker *XₙA,* which interconnects subsequent columns or layers, the *z* value can be varied between 0 and 3, *y* can be varied between 0.2 and 5 and A is the organic linker that contains *n* functionalities *X*.

15. A porous lanthanide organic material according to claim 14, **characterized in that** T is O.

16. A method of preparation of a hydrophobic porous lanthanide-organic material defined in claim 1 which comprises at least the steps of:
- mixing a solution containing one ore more metal ions from the lanthanides group along with the corresponding metal salt counteranion, with a solution or a dispersion of an organic or inorganic solvent or a mixture of both, containing the fluorinated ligand and
- heating the mixture at temperatures from 20 to 300°C and for periods of time from 30 minutes to one month in order to generate the hydrophobic lanthanide-organic material.

17. A method according to claim 16, **characterized in that** the organic linker is 4,4'-(1,1,1,3,3,3-hexafluoropropane-2,2-diyl)dibenzoic acid and the solvent is selected from among aqueous or organic solvents and a mixture of both.

18. A method according to claim 16, **characterized in that** the organic linker is tetrafluoroterephthalic acid and the solvent is selected from among aqueous or organic solvents and a mixture of both.

19. The method according to claim 16, **characterized in that** the organic solvent is selected from among pentane, hexane, benzene, toluene, xylene, chlorobenzene, aniline, naphthalene, methanol, ethanol, n-propanol, isopropanol, acetone, 1,2-dichloroethane, chloroform, dimethylformamide (DMF), tetrahydrofurane and mixtures thereof.

20. The method according to claim 16, **characterized in that** it comprises the steps of:
- mixing a solution containing one ore more metal ions from the lanthanide group along with the corresponding metal salt counteranion, with a dispersion of the ligand 4,4'-(1,1,1,3,3,3-hexafluoropropane-2,2-diyl)dibenzoic acid in water.

21. The method according to claim 16, **characterized in that** it comprises the steps of:
- mixing a solution containing one ore more metal ions from the lanthanide group along with the corresponding metal salt counteranion, with a dispersion of the ligand tetrafluoroterephthalic acid in water.

22. Use of the lanthanide-organic material defined in any of claims 1 to 15 in the manufacturing of devices selected from among sensors, devices for data storage, devices for laser applications, light conversion molecular devices, fluorescent materials in plasma screens and electroluminescent devices.

23. Use of the lanthanide-organic material according to claim 22 **characterized in that** the sensors are photoluminescent gas sensors.

24. Use of the lanthanide-organic material according to claim 23 **characterized in that** the sensors are photoluminescent gas sensors for a compound selected from among oxygen, CO, organic vapors.

25. Use of the lanthanide-organic material according to claim 23 **characterized in that** the sensors are photoluminescent gas sensors for alcohols.

26. Use of the lanthanide-organic material according to claim 25 **characterized in that** the alcohol is ethanol.

27. Use of the lanthanide-organic material according to claim 22 **characterized in that** the device is a device for data storage.

28. Use of the lanthanide-organic material according to claim 22 **characterized in that** the device is a device for laser applications.

## Patentansprüche

1. Hydrophobes, poröses Lanthanoid-organisches Material, **dadurch gekennzeichnet, dass** es Säulen oder Schichten umfasst, worin sich die Lanthanoidatome befinden, wobei besagte Säulen oder Schichten von einander durch die Anwesenheit von fluorierten organischen Linkern auseinander gehalten werden, wobei besagte Linker mindestens zwei funktionelle Gruppen enthalten, welche in der Lage sind, Elektronen zu spenden.

2. Hydrophobes, poröses Lanthanoid-organisches Material gemäß Anspruch 1, **dadurch gekennzeichnet, dass** die funktionellen Gruppen ausgewählt sind aus Carboxylat, Sulfonat, Aminen und Gemischen daraus.

3. Hydrophobes, poröses Lanthanoid-organisches Material gemäß Anspruch 1, **dadurch gekennzeichnet, dass** die funktionellen Gruppen sekundäre Amine sind.

4. Hydrophobes, poröses Lanthanoid-organisches Material gemäß Anspruch 1, **dadurch gekennzeichnet, dass** das Lanthanoidmetall ausgewählt ist aus La, Ce Pr, Nd, Sm, Eu, Gd, Tb, Dy, Ho, Er, Tm, Lu, Yb und Gemischen daraus.

5. Hydrophobes poröses Lanthanoid-organisches Material gemäß Anspruch 2, **dadurch gekennzeichnet, dass** das Lanthanoidmetall ausgewählt ist zwischen La, Ce Pr, Nd, Sm, Eu, Gd, Tb, Dy, Ho, Er, Tm, Lu und Yb und der organische Linker, platziert zwischen nachfolgenden Säulen oder Schichten, die allgemeine Formel
*XnA*
hat, worin *X* für eine funktionelle organische Gruppe steht, welche in der Lage ist, Elektronen zu spenden, A für einen organischen Linker steht, der mindestens ein Fluoratom in seiner Zusammensetzung enthält, und n die Anzahl an Funktionalitäten, gebunden an den A-Abstandhalter darstellt und zwischen 2 und 6 umfasst.

6. Hydrophobes, poröses Lanthanoid-organisches Material gemäß einem der vorhergehenden Ansprüche, **dadurch gekennzeichnet, dass** der organische Linker einen oder mehrere aromatische Ringe hat und ein Teil der Wasserstoffatome, welche an den aromatischen Ringen vorhanden sind, teilweise oder vollständig substituiert sind.

7. Hydrophobes, poröses Lanthanoid-organisches Material gemäß Anspruch 6, **dadurch gekennzeichnet, dass** die Wasserstoffatome, welche an den aromatischen Ringen vorhanden sind, teilweise oder vollständig mit Substituenten substituiert sind, ausgewählt aus Cl, Br, I und Gemischen daraus.

8. Hydrophobes, poröses Lanthanoid-organisches Material gemäß Anspruch 1, **dadurch gekennzeichnet, dass** das Lanthanoidmetall ausgewählt ist aus La, Ce Pr, Nd, Sm, Eu, Gd, Tb, Dy, Ho, Er, Tm, Lu und Yb und Gemischen daraus, und der organische Linker 4,4'-(1,1,1,3,3,3-Hexafluorpropan-2,2-diyl)dibenzoesäure (HFIPBB) ist.

9. Hydrophobes poröses Lanthanoid-organisches Material gemäß Anspruch 1, **dadurch gekennzeichnet, dass** es 4,4'-(1,1,1,3,3,3-Hexafluorpropan-2,2-diyl)dibenzoat als organischen Linker enthält, und dass es mindestens die folgenden Röntgenbeugungslinien in seinem Röntgendiagramm zeigt:
| Pos. [°2Th.] ± 0,5 | Rel. Int. [%] |
|---|---|
| 4,7 | S |
| 8,2 | M |
| 9,5 | VS |
| 12,6 | Mw |
| 14,3 | Mw |
| 22,0 | W |
| 24,0 | Vw |
| 25,0 | Vw |
| 29,2 | Vw |
worin die relativen Intensitäten auf die stärkste Linie bezogen werden, welche 100% Intensität hat und vw<15; 15≤w<30; 30≤mw<50; 50≤m<65; 65≤S<85; VS≥85.

10. Hydrophobes, poröses Lanthanoid-organisches Material gemäß Anspruch 1, **dadurch gekennzeichnet, dass** es 4,4'-(1,1,1,3,3,3-Hexafluorpropan-2,2-diyl)dibenzoat als organischen Linker enthält, und dass es mindestens die folgenden Röntgenbeugungslinien in seinem Röntgendiagramm zeigt:
| Pos. [°2Th.] ± 0,5 | Rel. Int. [%] |
|---|---|
| 5,9 | m |
| 7,0 | VS |
| 9,2 | VS |
| 10,9 | vw |
| 11,9 | vw |
| 12,1 | vw |
| 12,5 | v |
| 13,9 | m |
| 14,1 | mw |
| 15,3 | vw |
| 18,5 | vw |
| 20,9 | vw |
| 22,0 | vw |
| 26,6 | vw |
| 27,8 | vw |
worin die relativen Intensitäten auf die stärkste Linie bezogen werden, welche 100% Intensität hat und vw<15; 15≤w<30; 30≤mw<50; 50≤m<65; 65≤S<85; VS≥85.

11. Poröses Lanthanoid-organisches Material gemäß Anspruch 10, **dadurch gekennzeichnet, dass** das Lanthanoidmetall ausgewählt ist aus La, Ce, Pr, Nd, Sm, Eu, Gd, Tb, Dy, Ho, Er, Tm, Yb, Lu und Gemischen daraus.

12. Hydrophobes, poröses Lanthanoid-organisches Material gemäß Anspruch 1, **dadurch gekennzeichnet, dass** das Lanthanoidmetall ausgewählt ist aus La, Ce, Pr, Nd, Sm, Eu, Gd, Tb, Dy, Ho, Er, Tm, Lu und Yb und Gemischen daraus und der organische Linker Tetrafluorterephthalsäure (TFTPA) ist.

13. Hydrophobes, poröses Lanthanoid-organisches Material gemäß Anspruch 1, **dadurch gekennzeichnet, dass** es Tetrafluorterephthalsäure als organischen Linker enthält und dass es mindestens die folgenden Röntgenbeugungslinien in seinem Röntgendiagramm zeigt:
| Pos. [°2Th.] ± 0,5 | Rel. Int. [%] |
|---|---|
| 8,2 | VS |
| 8,7 | S |
| 12,1 | vw |
| 17,6 | w |
| 18,7 | vw |
| 19,4 | w |
| 23,7 | vw |
| 26,0 | w |
| 26,5 | vw |
| 27,3 | w |
worin die relativen Intensitäten auf die stärkste Linie bezogen werden, welche 100% Intensität hat und vw<15; 15≤w<30; 30≤ mw<50; 50≤m<65; 65≤S<85; VS≥85.

14. Poröses Lanthanoid-organisches Material gemäß Anspruch 1, **dadurch gekennzeichnet, dass** die Lösungsmittel freie Form eine Formel gemäß:
MT_{z}L_{y}
hat, worin M ein oder mehrere Lanthanoidmetalle darstellt, T ein Atom darstellt, ausgewählt aus O, S und N, welches als Brücke zwischen zwei M-Atomen fungiert, und L den fluorierten organischen Linker *XₙA* darstellt, welcher nachfolgende Säulen oder Schichten miteinander verbindet, der *z*-Wert zwischen 0 und 3 variiert sein kann, *y* zwischen 0,2 und 5 variiert sein kann und A für den organischen Linker steht, der n Funktionalitäten *X* enthält.

15. Poröses Lanthanoid-organisches Material gemäß Anspruch 14, **dadurch gekennzeichnet, dass** T für O steht.

16. Verfahren zur Herstellung eines hydrophoben, porösen Lanthanoid-organischen Materials, definiert in Anspruch 1, welches mindestens die Schritte umfasst:
- Mischen einer Lösung, welche ein oder mehrere Metallionen aus der Lanthanoidgruppe zusammen mit dem entsprechenden Matallsalz-Gegenanion enthält, mit einer Lösung oder einer Dispersion eines organischen oder anorganischen Lösungsmittels oder einem Gemisch aus beiden, welche(s) den fluorierten Ligand enthält, und
- Erhitzen des Gemisches bei Temperaturen von 20 bis 300°C und für Zeiträume von 30 Minuten bis zu einem Monat, um das hydrophobe Lanthanoid-organische Material zu erzeugen.

17. Verfahren gemäß Anspruch 16, **dadurch gekennzeichnet, dass** der organische Linker 4,4'-(1,1,1,3,3,3-Hexafluorpropan-2,2-diyl)dibenzoesäure ist und das Lösungsmittel ausgewählt ist aus wässerigen oder organischen Lösungsmitteln und einem Gemisch aus beiden.

18. Verfahren gemäß Anspruch 16, **dadurch gekennzeichnet, dass** der organische Linker Tetrafluorterephthalsäure ist und das Lösungsmittel ausgewählt ist aus wässerigen oder organischen Lösungsmitteln und einem Gemisch aus beiden.

19. Verfahren gemäß Anspruch 16, **dadurch gekennzeichnet, dass** das organische Lösungsmittel ausgewählt ist aus Pentan, Hexan, Benzol, Toluol, Xylol, Chlorbenzol, Anilin, Naphthalin, Methanol, Ethanol, n-Propanol, Isopropanol, Aceton, 1,2-Dichlorethan, Chloroform, Dimethylformamid (DMF), Tetrahydrofuran und Gemischen daraus.

20. Verfahren gemäß Anspruch 16, **dadurch gekennzeichnet, dass** es die Schritte umfasst:
- Mischen einer Lösung, welche ein oder mehrere Metallionen aus der Lanthanoidgruppe zusammen mit dem entsprechenden Metallsalz-Gegenanion enthält, mit einer Dispersion aus dem Ligand 4,4'-(1,1,1,3,3,3-Hexafluorpropan-2,2-diyl)di-benzoesäure in Wasser.

21. Verfahren gemäß Anspruch 16, **dadurch gekennzeichnet, dass** es die Schritte umfasst:
- Mischen einer Lösung, welche ein oder mehrere Metallionen aus der Lanthanoidgruppe zusammen mit dem entsprechenden Metallsalz-Gegenanion enthält, mit einer Dispersion aus dem Ligand Tetrafluorterephthalsäure in Wasser.

22. Verwendung des Lanthanoid-organischen Materials, definiert in einem von Ansprüchen 1 bis 15, in der Herstellung von Vorrichtungen, ausgewählt aus Sensoren, Vorrichtungen für Datenspeicherung, Vorrichtungen für Laseranwendungen, molekularen Vorrichtungen für Lichtumwandlung, Leuchtstoffen in Plasmabildschirmen und elektrolumineszierenden Vorrichtungen.

23. Verwendung des Lanthanoid-organischen Materials gemäß Anspruch 22, **dadurch gekennzeichnet, dass** die Sensoren photolumineszierende Gassensoren sind.

24. Verwendung des Lanthanoid-organischen Materials gemäß Anspruch 23, **dadurch gekennzeichnet, dass** die Sensoren photolumineszierende Gassensoren für eine Verbindung, ausgewählt aus Sauerstoff, CO, organischen Dämpfen ist.

25. Verwendung des Lanthanoid-organischen Materials gemäß Anspruch 23, **dadurch gekennzeichnet, dass** die Sensoren photolumineszierende Gassensoren für Alkohole sind.

26. Verwendung des Lanthanoid-organischen Materials gemäß Anspruch 25, **dadurch gekennzeichnet, dass** der Alkohol Ethanol ist.

27. Verwendung des Lanthanoid-organischen Materials gemäß Anspruch 22, **dadurch gekennzeichnet, dass** die Vorrichtung eine Vorrichtung für Datenspeicherung ist.

28. Verwendung des Lanthanoid-organischen Materials gemäß Anspruch 22, **dadurch gekennzeichnet, dass** die Vorrichtung eine Vorrichtung für Laseranwendungen ist.

## Revendications

1. Matériau lanthanide-organique poreux hydrophobe, **caractérisé en ce qu'**il comprend des colonnes ou couches, dans lesquelles les atomes de lanthanide sont localisés, lesdites colonnes ou couches étant maintenues séparées les unes des autres par la présence de lieurs organiques fluorés, lesdits lieurs contenant au moins deux radicaux fonctionnels capables de donner des électrons.

2. Matériau lanthanide-organique poreux hydrophobe selon la revendication 1, **caractérisé en ce que** les radicaux fonctionnels sont choisis parmi les carboxylates, les sulfonates, les amines et leurs mélanges.

3. Matériau lanthanide-organique poreux hydrophobe selon la revendication 1, **caractérisé en ce que** les radicaux fonctionnels sont des amines secondaires.

4. Matériau lanthanide-organique poreux hydrophobe selon la revendication 1, **caractérisé en ce que** le métal lanthanide est choisi parmi La, Ce, Pr, Nd, Sm, Eu, Gd, Tb, Dy, Ho, Er, Tm, Lu, Yb et leurs mélanges.

5. Matériau lanthanide-organique poreux hydrophobe selon la revendication 2, **caractérisé en ce que** le métal lanthanide est choisi parmi La, Ce, Pr, Nd, Sm, Eu, Gd, Tb, Dy, Ho, Er, Tm, Lu et Yb, et que le lieur organique placé entre les colonnes ou couches consécutives, a la formule générale :
XnA
dans laquelle X est un radical organique fonctionnel capable de donner des électrons, A est un lieur organique, qui contient au moins un atome de fluor dans sa composition et n est le nombre de fonctionnalités liées à l'espaceur A et est compris dans l'intervalle allant de 2 à 6.

6. Matériau lanthanide-organique poreux hydrophobe selon l'une quelconque des revendications précédentes, **caractérisé en ce que** le lieur organique a un ou plusieurs cycles aromatiques et une partie des atomes d'hydrogène présents sur les cycles aromatiques sont partiellement ou complètement substitués.

7. Matériau lanthanide-organique poreux hydrophobe selon la revendication 6, **caractérisé en ce que** les atomes d'hydrogène présents sur les cycles aromatiques sont partiellement ou complètement substitués par des substituants choisis parmi Cl, Br, I et leurs mélanges.

8. Matériau lanthanide-organique poreux hydrophobe selon la revendication 1, **caractérisé en ce que** le métal lanthanide est choisi parmi La, Ce, Pr, Nd, Sm, Eu, Gd, Tb, Dy, Ho, Er, Tm, Lu et Yb, et leurs mélanges et que le lieur organique est l'acide 4,4'-(1,1,1,3,3,3-hexafluoropropane-2,2-diyl)dibenzoïque (HFIPBB).

9. Matériau lanthanide-organique poreux hydrophobe selon la revendication 1, **caractérisé en ce qu'**il contient le 4,4'-(1,1,1,3,3,3-hexafluoropropane-2,2-diyl)dibenzoate comme lieur organique, et qu'il montre au moins les lignes de diffraction des rayons X suivantes dans son relevé aux rayons X _{:}
| Pos. [°2Th.] ±0,5 | Int. Rel. [%] |
|---|---|
| 4,7 | S |
| 8,2 | M |
| 9,5 | VS |
| 12,6 | Mw |
| 14,3 | Mw |
| 22,0 | W |
| 24,0 | Vw |
| 25,0 | Vw |
| 29,2 | Vw |
où les intensités relatives sont relatives à la ligne la plus intense, qui a une intensité de 100%, et Vw < 15 ; 15 ≤ W < 30 ; 30 ≤ Mw < 50 ; 50 ≤ M < 65 ; 65 ≤ S < 85 ; VS ≥ 85.

10. Matériau lanthanide-organique poreux hydrophobe selon la revendication 1, **caractérisé en ce qu'**il contient le 4,4'-(1,1,1,3,3,3-hexafluoropropane-2,2-diyl)dibenzoate comme lieur organique, et qu'il montre au moins les lignes de diffraction des rayons X suivantes dans son relevé aux rayons X :
| Pos. [°2Th.] ±0,5 | Int. Rel. [%] |
|---|---|
| 5,9 | M |
| 7,0 | VS |
| 9,2 | VS |
| 10,9 | Vw |
| 11,9 | Vw |
| 12,1 | Vw |
| 12,5 | V |
| 13,9 | M |
| 14,1 | Mw |
| 15,3 | Vw |
| 18,5 | Vw |
| 20,9 | Vw |
| 22,0 | Vw |
| 26,6 | Vw |
| 27,8 | Vw |
où les intensités relatives sont relatives à la ligne la plus intense, qui a une intensité de 100%, et Vw < 15 ; 15 ≤ W < 30 ; 30 ≤ Mw < 50 ; 50 ≤ M < 65 ; 65 ≤ S < 85 ; VS ≥ 85.

11. Matériau lanthanide-organique poreux selon la revendication 10, **caractérisé en ce que** le métal lanthanide est choisi parmi La, Ce, Pr, Nd, Sm, Eu, Gd, Tb, Dy, Ho, Er, Tm, Yb, Lu et leurs mélanges

12. Matériau lanthanide-organique poreux hydrophobe selon la revendication 1, **caractérisé en ce que** le métal lanthanide est choisi parmi La, Ce, Pr, Nd, Sm, Eu, Gd, Tb, Dy, Ho, Er, Tm, Lu et Yb, et leurs mélanges et que le lieur organique est l'acide tétrafluorotéréphtalique (TFTPA).

13. Matériau lanthanide-organique poreux hydrophobe selon la revendication 1, **caractérisé en ce qu'**il contient l'acide tétrafluorotéréphtalique comme lieur organique, et qu'il montre au moins les lignes de diffraction des rayons X suivantes dans son relevé aux rayons X :
| Pos. [°2Th.] ±0,5 | Int. Rel. [%] |
|---|---|
| 8,2 | VS |
| 8,7 | S |
| 12,1 | Vw |
| 17,6 | W |
| 18,7 | Vw |
| 19,4 | W |
| 23,7 | Vw |
| 26,0 | W |
| 26,5 | Vw |
| 27.3 | W |
où les intensités relatives sont relatives à la ligne la plus intense, qui a une intensité de 100%, et Vw < 15 ; 15 < W < 30 ; 30 ≤ Mw < 50 ; 50 ≤ M < 65 ; 65 ≤ S < 85 ; VS ≥ 85.

14. Matériau lanthanide-organique poreux selon la revendication 1, **caractérisé en ce que** dans la forme exempte de solvant, il a une formule correspondant à :
MT_{z}L_{y}
dans laquelle M est un ou plusieurs métaux lanthanide, T est un atome choisi parmi 0, S et N, agissant comme pont entre deux atomes M, et L est le lieur organique fluoré XₙA, qui interconnecte les colonnes ou couches successives, la valeur z peut varier dans l'intervalle allant de 0 à 3, y peut varier dans l'intervalle allant de 0,2 à 5, et A est le lieur organique qui contient n fonctionnalités X.

15. Matériau lanthanide-organique poreux selon la revendication 14, **caractérisé en ce que** T est 0.

16. Procédé de préparation d'un matériau lanthanide-organique poreux hydrophobe défini à la revendication 1, qui comprend au moins les étapes de :
- mélange d'une solution contenant un ou plusieurs ions métalliques du groupe des lanthanides avec les contre-anions du sel métallique correspondant, avec une solution ou dispersion d'un solvant organique ou inorganique ou d'un mélange des deux, contenant le ligand fluoré, et
- chauffage du mélange à une température allant de 20 à 300°C et pendant des périodes allant de 30 minutes à un mois, afin de générer le matériau lanthanide-organique hydrophobe.

17. Procédé selon la revendication 16, **caractérisé en ce que** le lieur organique est l'acide 4,4'-(1,1,1,3,3,3-hexafluoropropane-2,2-diyl)-dibenzoïque et que le solvant est choisi parmi des solvants aqueux ou organiques et un mélange des deux.

18. Procédé selon la revendication 16, **caractérisé en ce que** le lieur organique est l'acide tétrafluorotéréphtalique et que le solvant est choisi parmi des solvants aqueux ou organiques et un mélange des deux.

19. Procédé selon la revendication 16, **caractérisé en ce que** le solvant est choisi parmi le pentane, l'hexane, le benzène, le toluène, le xylène, le chlorobenzène, l'aniline, le naphtalène, le méthanol, l'éthanol, le n-propanol, l'isopropanol, l'acétone, le 1,2-dichloroéthane, le chloroforme, le diméthylformamide (DMF), le tétrahydrofuranne et leurs mélanges.

20. Procédé selon la revendication 16, **caractérisé en ce qu'**il comprend les étapes de :
- mélange d'une solution contenant un ou plusieurs ions du groupe des lanthanides avec le contre-anion du sel métallique correspondant, avec une dispersion du ligand acide 4,4'-(1,1,1,3,3,3-hexafluoropropane-2,2-diyl)dibenzoïque dans l'eau.

21. Procédé selon la revendication 16, **caractérisé en ce qu'**il comprend les étapes de :
- mélange d'une solution contenant un ou plusieurs ions du groupe des lanthanides avec le contre-anion du sel métallique correspondant, avec une dispersion du ligand acide tétrafluorotéréphtalique dans l'eau.

22. Utilisation du matériau lanthanide-organique tel que défini dans l'une quelconque des revendications 1 à 15, dans la préparation de dispositifs choisis parmi les capteurs, les dispositifs de stockage de données, les dispositifs pour applications laser, les dispositifs moléculaires de conversion de la lumière, les matériaux fluorescents dans les écrans plasma et les dispositifs électroluminescents.

23. Utilisation du matériau lanthanide-organique selon la revendication 22, **caractérisée en ce que** les capteurs sont des capteurs à gaz photoluminescent.

24. Utilisation du matériau lanthanide-organique selon la revendication 23, **caractérisée en ce que** les capteurs sont des capteurs à gaz photoluminescent pour un composé choisi parmi l'oxygène, le CO, des vapeurs organiques.

25. Utilisation du matériau lanthanide-organique selon la revendication 23, **caractérisée en ce que** les capteurs sont des capteurs à gaz photoluminescent pour des alcools.

26. Utilisation du matériau lanthanide-organique selon la revendication 25, **caractérisée en ce que** l'alcool est l'éthanol.

27. Utilisation du matériau lanthanide-organique selon la revendication 22, **caractérisée en ce que** le dispositif est un dispositif pour le stockage de données.

28. Utilisation du matériau lanthanide-organique selon la revendication 22, **caractérisée en ce que** le dispositif est un dispositif pour applications laser.
